# EUROPEAN PATENT SPECIFICATION

(11) **EP 3 663 199 B1**
(45) Date of publication and mention of the grant of the patent: **23.09.2026**
(21) Application number: 17919781.9
(22) Date of filing: 01.08.2017
(51) Int. Cl.: H04B 7/185, B64C 39/02, B64C 13/20, B64D 47/02, B64G 1/10, G05D 1/00, G08G 5/00

(54) **FLIGHT INFORMATION COLLECTION SYSTEM AND WIRELESS COMMUNICATION DEVICE.**
FLUGINFORMATIONERFASSUNGSVORRICHTUNG UND DRAHTLOSKOMMUNIKATIONSVORRICHTUNG.
SYSTÈME DE COLLECTE D'INFORMATIONS DE VOL ET DISPOSITIF DE COMMUNICATION SANS FIL.

(43) Date of publication of application: 10.06.2020
(73) Proprietor: Sky Perfect JSAT Corporation, Tokyo 107-0052 (JP)
(72) Inventor: TAKAMORI, Tetsumi, Tokyo 107-0052 (JP); SUZUKI, Jun, Tokyo 107-0052 (JP)
(74) Representative: Wright, Howard Hugh Burnby
(86) International application number: PCT/JP2017/027897
(87) International publication number: WO 2019/026179

(56) References cited:
- JP-A- 2005 082 018
- JP-A- 2007 526 175
- JP-A- 2013 515 242
- JP-A- 2015 191 254
- JP-A- H10 285 099
- US-A1- 2015 236 778
- US-A1- 2017 214 462
- US-B1- 9 626 874
- HOSSEIN MOTLAGH NASER ET AL: "Low-Altitude Unmanned Aerial Vehicles-Based Internet of Things Services: Comprehensive Survey and Future Perspectives", IEEE INTERNET OF THINGS JOURNAL, IEEE, USA, vol. 3, no. 6, 1 December 2016 (2016-12-01), pages 899 - 922, XP011638984, DOI: 10.1109/JIOT.2016.2612119

## Description

### Technical Field

The present invention relates to a technique for collecting flight information relating to a drone.

### Background Art

Drones (unmanned aircrafts) are expected to have potential for practical use in various fields including, among others, goods distribution, infrastructure inspection, and disaster response. For safe and efficient operation of drones, it would be imperative to establish a system whereby the flight situations of drones are determined correctly in real-time and this information is made useful for flight management and other purposes. An overview of drones is set out in MOTLAGH, N. H. et al "Low-Altitude Unmanned Aerial Vehicles-Based Internet of Things Services: Comprehensive Survey and Future Perspectives" IEEE Internet of Things Journal, December 2016, vol. 3, no. 6, pages 899-922.

### Citation List

### Patent Literature

[PTL 1] Japanese Patent Application Publication No. 2015-188150

### Summary of Invention

### Technical Problem

Systems that collect flight information relating to drones with the use of a mobile communication network such as LTE (Long Term Evolution) have hitherto been considered. With a method that utilizes a mobile communication network, however, when a large number of drones gather in a small area, errors can occur in communications due to congestion. Drone usage in a disaster area involves high risk because the line could go down due to destruction and electricity outage at a base station resulting from the disaster. If the drone enters a dead zone of the mobile communication network (e.g., at sea, in mountainous or remote areas, isolated islands, and so on), its flight situations are no longer available, and its safe operation cannot be guaranteed.

PTL 1 (Japanese Patent Application Publication No. 2015-188150) discloses an idea for extending the operation area of an unmanned aircraft by collecting data captured by the unmanned aircraft in the air and its position information with the use of satellite communications. Applying this idea as it is to operation management of drones (in particular, small drones) involves several problems. Firstly, satellite communication devices for performing satellite communications are expensive. High device introduction cost will limit users and may inhibit wider use of the flight information collection system. The second problem is the weight of satellite communication devices. Common satellite communication devices, even small ones, have a weight of the order of kilograms and can hardly be mounted on small drones. The third problem is the power consumption of satellite communication devices. Consuming power of the limited battery of the drone can be a hindrance to continuous flight and not desirable.

The present invention was made in view of the circumstances described above and it is an object of the invention to provide a technique for collecting flight information relating to a drone in a wide area including dead zones of mobile communication networks with low risk of line disconnection.

In realizing a system that collects flight information relating to a drone with the use of satellite communications, it is another object of the present invention to provide a technique for allowing easy mounting of the system to the drone.

### Solution to Problem

To achieve the above objects, the present invention adopts a configuration wherein acquisition of information from a drone and forwarding of the information to a ground station by satellite communications are achieved by a relay flying between the drone and a communication satellite.

More specifically, the present invention provides a system for collecting flight information relating to a drone as set out in claim 1. The present invention also provides a wireless communication device as set out in claim 8.

According to this system, the risk of line disconnection can be reduced significantly as compared to a mobile communication network such as LTE since the system uses satellite communications, and yet the flight information relating to drones can be collected from a very wide area. The wireless communication device mounted on the drone only need specifications that allow for wireless communications with the relay, and therefore its size, weight, power consumption, and cost can be reduced significantly as compared to a satellite communication device. Therefore, the wireless communication device can be readily mounted on the drone.

The relay may be an unmanned aerial vehicle. This is because unmanned aerial vehicles are more easily operated as compared to manned aircrafts, since they are capable of continuous flight as far as conditions allow. The relay may preferably fly in circles in a predetermined area. The relay may preferably include a solar panel that generates energy for the flight and communications. The first altitude may be at least 20 km high and not more than 25 km high.

The wireless communication device includes a power supply independent of that of the drone. By having an independent power supply, no connection with the drone's power supply is necessary. Thus attachment of the wireless communication device to the drone is made easy. Since the operation of the wireless communication device does not consume the battery of the drone, the flight performance (such as flight distance) of the drone may not be adversely affected. Moreover, even in the event of a drone failure or dead battery, the information transmission by the wireless communication device can be carried on.

The information relating to the drone transmitted from the wireless communication device may preferably include at least information relating to a position and an altitude of the drone, and time information. The flight conditions of the drone can be determined if information relating to its position (e.g., latitude and longitude), altitude, and time is available. The wireless communication device may preferably include a memory that accumulates the information relating to the drone. This way, the wireless communication device can also function as a flight recorder.

The wireless communication device may preferably include a GPS unit for measuring a position and an altitude of the drone. The drone itself often contains a GPS unit and an alternative configuration in which the position information is acquired from the drone would also be possible. In that case, however, it is necessary to connect the wireless communication device with the control unit of the drone. With a GPS unit independent of the drone provided to the wireless communication device as in the present invention, the wireless communication device can be readily attached to the drone. Even in the event of a drone failure, the positioning by the wireless communication device can be carried on.

The "wireless communication device", "relay", and "ground station" that are parts of the flight information collection system described above can be understood as individual inventions.

### Advantageous Effects of Invention

According to the present invention, a system can be realized, in which, with the use of satellite communications, flight information relating to drones in a wide area including dead zones of mobile communication networks can be collected with low risk of line disconnection. The cost, weight, size, and power consumption of the communication device mounted on individual drones can be reduced significantly, so that the device can be mounted to the drone easily.

### Brief Description of Drawings

[Fig. 1]

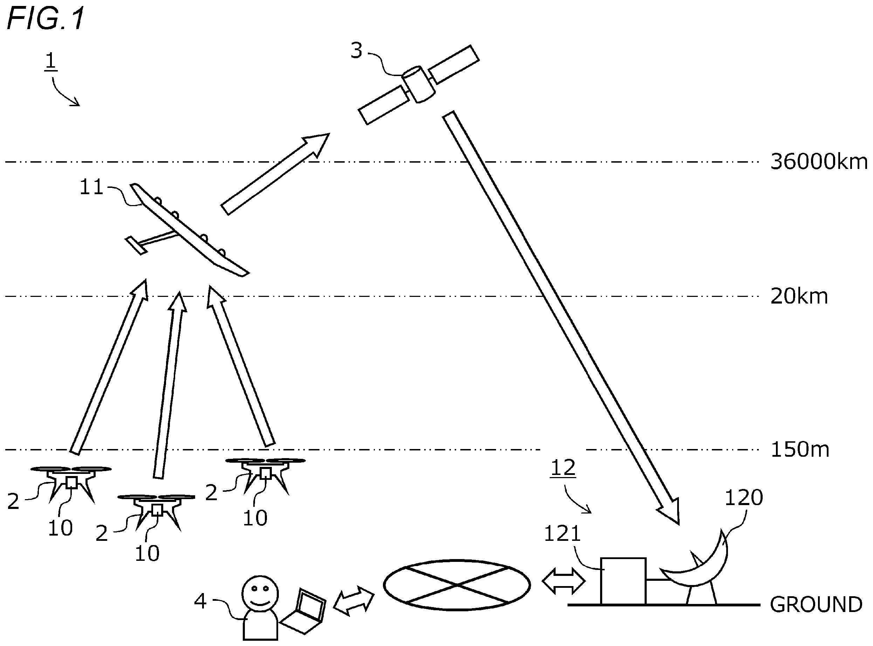

   Fig. 1 is a diagram showing an overall picture of a system for collecting flight information relating to drones.
[Fig. 2]

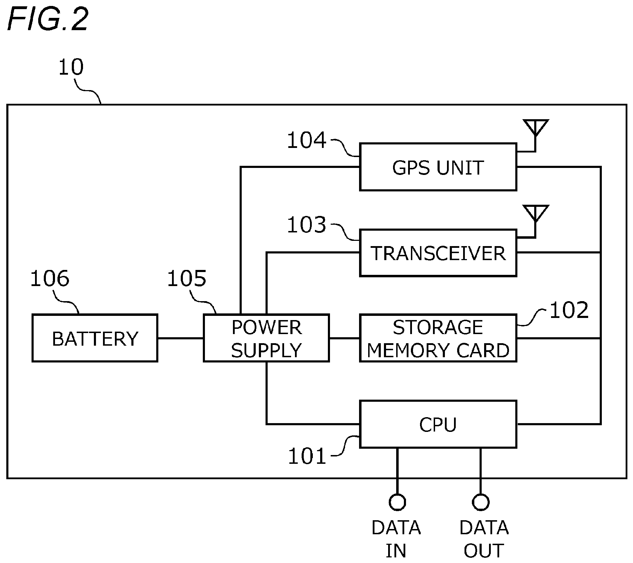

   Fig. 2 is a schematic block diagram illustrating the configuration of a low-power communication unit.
[Fig. 3]

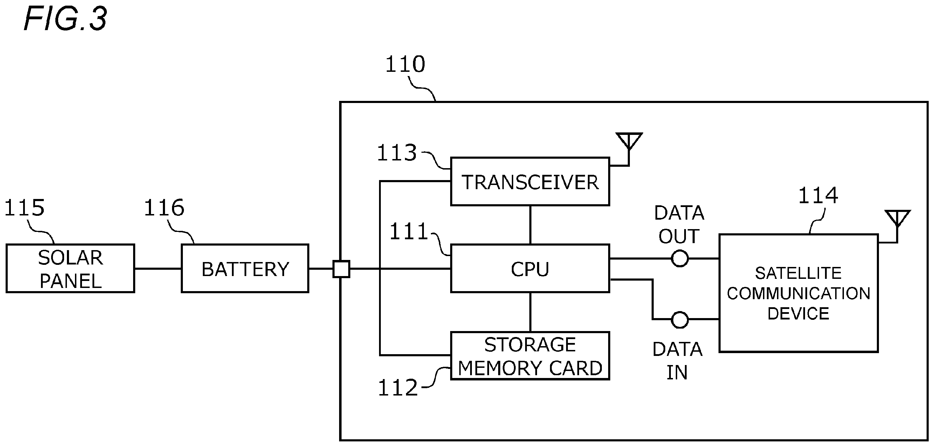

   Fig. 3 is a schematic block diagram illustrating the configuration of a communication unit mounted on an unmanned aerial vehicle.

### Description of Embodiments

One example of a preferred embodiment for carrying out the present invention will be described below with reference to the drawings. It will be understood that the configuration and operation of the system and device described in the following embodiment are merely examples and are not intended to limit the scope of the present invention.

### (System Configuration)

Fig. 1 shows an overall picture of a system for collecting flight information relating to drones according to one embodiment of the present invention. This flight information collection system 1 is a system that collects flight information (such as latitudes, longitudes, altitudes, speeds, density situations, and so on) of drones present in a monitored area in real-time, and uses the information for flight management of the drones, or provides services to drone operators or third parties.

The flight information collection system 1 generally includes a low-power communication unit 10 mounted on a drone 2, an unmanned aerial vehicle 11 or a relay that relays communications between the drone 2 and a communication satellite 3, and a control center 12 or a ground station that communicates with the unmanned aerial vehicle 11 by satellite communications. While Fig. 1 shows three drones 2 (low-power communication units 10) and one relay (unmanned aerial vehicle 11), the flight information collection system 1 may include two or more relays, or one relay may communicate with several tens to several hundred drones 2.

The drone 2 is an unmanned flying object that can fly on remote control or on autopilot and corresponds, for example, to a multicopter (rotary-wing aircraft), radio control aircraft, crop dusting helicopter, and so on. Typically, the drone 2 is expected to be a multicopter type, but can come in all sizes ranging from about ten centimeters to several meters depending on the purpose of use (recreational use, cargo delivery, aerial photography, disaster relief operation and so on). In Japan, the Civil Aeronautics Act basically prohibits flying drones 2 in airspace at least 150 m high from the ground or the sea to avoid collisions with manned aircrafts.

The low-power communication unit 10 is a small, lightweight, and low power wireless communication device. In this embodiment the unit is expected to be about 5 cm × 5 cm × 1.5 cm in size with a weight of no more than 200 g. The low-power communication unit 10 may be initially mounted on the drone 2, or can be retrofitted to the drone 2. When retrofitted, the low-power communication unit 10 is bonded to the body of the drone 2, for example, with a double-sided tape or hook-and-loop fastener.

Fig. 2 is a schematic block diagram illustrating the configuration of the low-power communication unit 10. As major hardware components, the low-power communication unit 10 includes a CPU (control circuit) 101, a storage memory card 102, a transceiver 103, a GPS (Global Positioning System) unit 104, a power supply 105, and a battery 106. The low-power communication unit 10 also includes a data I/O for communications with an external unit (e.g., control unit of the drone 2 itself).

The CPU 101 is a processor that controls various parts of the low-power communication unit 10, performs various calculations, data processing, and reading/writing of data to and from the storage memory card 102. The storage memory card 102 is a non-volatile memory medium and used for accumulation of flight information, for example. The storage memory card 102 contains a unique individual identification symbol stored therein for identifying the low-power communication unit 10. The transceiver 103 is a specified low-power wireless communication module for wireless communications with the unmanned aerial vehicle 11. The frequency and power of the wireless communications can be designed as required in accordance with the device configuration, operation, and applicable laws and regulations. For example, a frequency in a range from 920 MHz band to GHz band with power of from about 0.01 W to 1 W can be used for the wireless communications. The GPS unit 104 is a circuit that receives signals from a GPS satellite and outputs position information such as latitude, longitude and altitude. The power supply 105 is a circuit that supplies the power of the battery 106 to the CPU 101, storage memory card 102, transceiver 103, and GPS unit 104. The battery 106 is either a primary battery or a secondary battery, which has a sufficient capacity for allowing the low-power communication unit 10 to operate at least for several days. A lithium ion battery and the like, for example, is preferable.

One of the characteristic features of the low-power communication unit 10 of this embodiment is that it has a processor, a power supply, and a position sensor independently of the drone 2. This allows the low-power communication unit 10 to be readily attached to the drone 2 without modifying the drone. Since the processing associated with the collection of flight information (such as positioning and transmission of information) does not put a load on the control unit on the drone 2 side, or consume the power of the drone 2 battery, the flight performance of the drone 2 (such as flight distance and speed) cannot be adversely affected. Even if the drone 2 is disabled due to a failure or dead battery, the low-power communication unit 10 keeps transmitting the independently acquired position information, so that search and recovery of the drone 2 will be easier. Another advantage is that the range of damage can be predicted. With the CPU 101 accumulating flight information to the storage memory card 102, the memory card can even serve as a flight recorder.

The unmanned aerial vehicle 11 is a flying object that relays communications between the drone 2 and the communication satellite 3. This embodiment uses a solar plane whose flight is powered by solar energy. Utilizing solar energy enables a long term continuous flight as well as a significant reduction of operation cost. The unmanned aerial vehicle 11 is programmed to fly in circles in a predetermined area. As it goes around in the same area, the communication quality can be made stable. The unmanned aerial vehicle 11 can be made to fly in a circular orbit with a radius of about 1 km, for example. A preferable flight altitude is within the stratosphere, in particular in the range of from 20 km to 25 km. This is because winds are relatively low speed and stable in this altitude range, so that it is easy for the unmanned aerial vehicle 11 to fly stably.

Fig. 3 is a schematic block diagram illustrating the configuration of a communication unit 110 mounted on the unmanned aerial vehicle 11. This communication unit 110 includes a CPU (control circuit) 111, a storage memory card 112, a transceiver 113, and a satellite communication device 114. The unmanned aerial vehicle 11 includes a solar panel 115 that generates energy for powering the flight and communications, and a battery 116. The communication unit 110 is powered by this battery 116.

The CPU 111 is a processor that controls various parts of the communication unit 110, performs various calculations, data processing, and reading/writing of data to and from the storage memory card 112. The storage memory card 112 is a non-volatile memory medium and used for accumulation of flight information, for example. The transceiver 113 is a communication module for receiving information relating to the drone 2 transmitted from the low-power communication unit 10 of the drone 2. The satellite communication device 114 is a device for performing satellite communications with the use of the communication satellite 3.

The control center 12 includes an antenna 120 for the satellite communications and an information processing device 121. The information processing device 121 can be configured by a general-purpose computer that includes a CPU, a memory, a storage device, a display device, a network interface, and so on. The features of the information processing device 121 include, for example, collecting position information relating to the drone 2, determining the flight situations, and managing the flight, of the drone 2 flying within the area based on the collected position information, and providing the collected position information, either processed or unprocessed, to the operator 4 of the drone 2 or third parties via Internet. These features are realized by the CPU executing a program stored in the storage device and loaded to the memory. The information processing device 121 may be configured by one computer, or a plurality of computers.

### (System operation)

The method of collecting flight information relating to drones by the flight information collection system 1 will be described with reference to Fig. 1.

To access the flight information collection system 1, an operator 4 of a drone 2 registers information relating to the applicable vehicle to a control center 12. For example, the operator 4 accesses the information processing device 121 of the control center 12 via Internet from a mobile terminal (such as a mobile computer, tablet terminal, smartphone, and so on) to register as a user, as well as registers an individual identification symbol of the low-power communication unit 10 mounted on the drone 2. Thereupon the service provided by the flight information collection system 1 becomes available to the operator 4.

When the operator 4 turns on the low-power communication unit 10 and starts flying the drone 2, the low-power communication unit 10 carries out positioning by GPS at a predetermined time interval (of, for example, once every several ten milliseconds to several ten seconds), transmits this information, as well as records the information to the storage memory card 102. The information transmitted from the low-power communication unit 10 is also referred to as telemetry information. The telemetry information may preferably include at least information relating to latitude, longitude, altitude, positioning time, and individual identification symbol. The telemetry information may further include information relating to speed (temporal differentiation of position) and acceleration (temporal differentiation of speed).

The unmanned aerial vehicle 11 receives the telemetry information transmitted from the drone 2 within the monitored area (communicable area) of its own, and forwards the information to the control center 12 via satellite communications. The unmanned aerial vehicle 11 may forward the telemetry information serially every time it receives the information, or forward the telemetry information relating to a plurality of drones 2 collectively.

The information processing device 121 of the control center 12 calculates the position, speed, flying direction and so on of the drone 2 based on the received telemetry information, and accumulates the flight information in correspondence with the individual identification symbol in a database. The information processing device 121 can use this information for various purposes such as for determining the flight conditions of the drone 2 and for managing its flight. The information processing device 121 may for example generate a map in real-time that indicates the flight information relating to all the drones 2 present within the monitored area, and make it available for the public via a website. The information processing device 121 may also provide the operator 4 of the drone 2 with the service of distributing the flight information relating to registered vehicle (individual identification symbol).

### (Advantages of the system)

According to the flight information collection system 1 described above, the risk of line disconnection can be reduced significantly as compared to a mobile communication network such as LTE since the system uses satellite communications, and yet the flight information relating to drones 2 in a wide area (including regions where the mobile communication network is not available) can be collected. The low-power communication unit 10 mounted on the drone 2 only need specifications that allow for wireless communications with the unmanned aerial vehicle 11, and therefore its size, weight, power consumption, and cost can be reduced significantly as compared to a common satellite communication device. Moreover, the low-power communication unit has an independent power supply so that the drone 2 need not be modified when attaching the unit to the drone. The low-power communication unit 10 can therefore be introduced and mounted easily. This is a great advantage in spreading the services of this system 1. In the event of a disaster, for example, a large number of drones could be flown in or around the disaster site. In such a case, flight management of the drones in or around the disaster site can be readily achieved simply by distributing the low-power communication units 10 to drone operators and have them attach the units to the drones.

### (Variation Example)

The configuration of the embodiment described above was shown only as one specific example of the present invention. The flight information collection system of the present invention can adopt various other configurations than the embodiment described above.

For example, in the method of the embodiment described above, the information relating to drones 2 is collected to the control center 12 via the unmanned aerial vehicle 11 and communication satellite 3. Conversely, signals transmitted from the control center 12 may be sent to the drones 2 via the communication satellite 3 and unmanned aerial vehicle 11. The latter system can be used to enable remote control of the drone 2, in which the operator 4 accesses the control center 12 via Internet and inputs control commands to the drone 2.

While the embodiment described above is directed to unmanned drones 2, the system can also be used for determining the operating situations of manned aircrafts, or unmanned ground vehicles or unmanned marine vessels. The system can also be applied to determination of situations of not just devices (machines) but any moving bodies. For example, the system can be deployed in investigation of wildlife behaviors or assessment of human behaviors.

It would also be preferable to collect other information than positions from the drone 2. For example, information (such as image, temperature, illuminance, atmospheric pressure, precipitation, wind speed, noise, and so on) acquired by sensors mounted on the low-power communication unit 10 or the drone 2 may be advantageously collected.

While the embodiment described above uses an unmanned aerial vehicle as the relay, a manned airplane can also be used. Alternatively, other flying objects such as an airship, balloon, and helicopter may also be used as the relay. While the flight altitude of the relay is specified to the stratosphere (in particular, 20 km to 25 km) in the embodiment described above, the flight altitude of the relay is not limited to this range. The relay can fly at any height at least between a height which a drone can fly at and the height of the communication satellite, such as for example anywhere in a range of about several hundred meters to several kilometers.

### Reference Signs List

- 1: Flight information collection system
- 2: Drone
- 3: Communication satellite
- 4: Drone operator
- 10: Low-power communication unit
- 11: Unmanned aerial vehicle
- 12: Control center
- 120: Antenna for satellite communications
- 121: Information processing device

## Claims

1. A system (1) for collecting flight information relating to a drone (2), the system (1) comprising:
a wireless communication device (10) mounted on the drone (2);
a relay (11) flying at a first altitude between an altitude the drone (2) is capable of flying at and an altitude of a communication satellite (3); and
a ground station (12) performing satellite communications with the communication satellite (3), wherein
the wireless communication device (10) transmits information relating to the drone (2),
the relay (11) includes a receiver (113) receiving information relating to the drone (2) transmitted from the wireless communication device (10), and a satellite communication device (114) sending the information relating to the drone (2) received by the receiver (113) to the ground station (12) by satellite communications using the communication satellite (3), and
the ground station (12) collects information relating to the drone (2) from the relay (11) by satellite communications,
**characterized in that** the wireless communication device (10) is a separate device from the drone (2) and is attached to the drone (2), the wireless communication device (10) including a power supply (105, 106), a processor (101), a wireless communication module (103), and a GPS unit (104) for measuring the position and the altitude of the drone (2), wherein the power supply, the processor and the GPS unit are independent of the drone (2).

2. The system (1) for collecting flight information according to claim 1, wherein the relay (11) is an unmanned aerial vehicle (11).

3. The system (1) for collecting flight information according to claim 1 or 2, wherein the relay (11) flies in circles in a predetermined area.

4. The system (1) for collecting flight information according to any one of claims 1 to 3, wherein the relay (11) includes a solar panel (115) generating energy for flight and communications.

5. The system (1) for collecting flight information according to any one of claims 1 to 4, wherein the first altitude is at least 20 km high and not more than 25 km high.

6. The system (1) for collecting flight information according to any one of claims 1 to 5, wherein the information relating to the drone (2) transmitted from the wireless communication device (10) at least includes information relating to a position and an altitude of the drone (2), and time information.

7. The system (1) for collecting flight information according to claim 1, wherein the wireless communication device (10) further includes a non-volatile memory (102) serving as a flight recorder, and
wherein the wireless communication device (10) measures the position and the altitude of the drone (2) by the GPS unit (104) at a predetermined time interval, and transmits measured information to the relay (11), as well as recording the measured information to the non-volatile memory (102).

8. A wireless communication device (10), mounted on a drone (2),
the wireless communication device (10) transmitting information relating to the drone (2) to a relay (11) flying at a first altitude between an altitude the drone (2) is capable of flying at and an altitude of a communication satellite (3),
**characterized in that** the wireless communication device (10) is a separate device from the drone (2) and is attached to the drone (2), the wireless communication device (10) including a power supply (105, 106), a processor (101), a wireless communication module (103), and a GPS unit (104) for measuring the position and the altitude of the drone (2), wherein the power supply, the processor and the GPS unit are independent of the drone (2).

## Patentansprüche

1. System (1) zur Erfassung von Fluginformationen in Bezug auf eine Drohne (2), wobei das System (1) Folgendes umfasst:
eine drahtlose Kommunikationsvorrichtung (10), die an der Drohne (2) montiert ist;
ein Relais (11), das auf einer ersten Höhe zwischen einer Höhe, die von der Drohne (2) erreicht werden kann, und einer Höhe eines Kommunikationssatelliten (3), fliegt; und
eine Bodenstation (12), die Satellitenkommunikationen mit dem Kommunikationssatelliten (3) durchführt, wobei
die drahtlose Kommunikationsvorrichtung (10) Informationen in Bezug auf die Drohne (2) überträgt,
das Relais (11) einen Empfänger (113) einschließt, der Informationen in Bezug auf die Drohne (2) empfängt, die von der drahtlosen Kommunikationsvorrichtung (10) übertragen werden, und eine Satellitenkommunikationsvorrichtung (114), die die vom Empfänger (113) der Bodenstation (12) empfangenen Informationen in Bezug auf die Drohne (2) durch Satellitenkommunikationen unter Verwendung des Kommunikationssatelliten (3) sendet, und
wobei die Bodenstation (12) Informationen in Bezug auf die Drohne (2) vom Relais (11) durch Satellitenkommunikationen erfasst,
**dadurch gekennzeichnet, dass** die drahtlose Kommunikationsvorrichtung (10) eine von der Drohne (2) getrennte Vorrichtung ist und an der Drohne (2) befestigt ist, wobei die drahtlose Kommunikationsvorrichtung (10) eine Stromversorgung (105, 106), einen Prozessor (101), ein drahtloses Kommunikationsmodul (103) und eine GPS-Einheit (104) zum Messen der Position und der Höhe der Drohne (2) einschließt, wobei die Stromversorgung, der Prozessor und die GPS-Einheit von der Drohne (2) unabhängig sind.

2. System (1) zur Erfassung von Fluginformationen nach Anspruch 1, wobei das Relais (11) ein unbemanntes Luftfahrzeug (11) ist.

3. System (1) zur Erfassung von Fluginformationen nach Anspruch 1 oder 2, wobei das Relais (11) in Kreisen in einem vorbestimmten Bereich fliegt.

4. System (1) zur Erfassung von Fluginformationen nach einem der Ansprüche 1 bis 3, wobei das Relais (11) ein Solarpanel (115) einschließt, das Energie für Flug und Kommunikationen erzeugt.

5. System (1) zur Erfassung von Fluginformationen nach einem der Ansprüche 1 bis 4, wobei die erste Höhe mindestens 20 km hoch und höchstens 25 km ist.

6. System (1) zur Erfassung von Fluginformationen nach einem der Ansprüche 1 bis 5, wobei die von der drahtlosen Kommunikationsvorrichtung (10) übertragenen Informationen in Bezug auf die Drohne (2) mindestens Informationen in Bezug auf eine Position und eine Höhe der Drohne (2) und Zeitinformationen einschließen.

7. System (1) zur Erfassung von Fluginformationen nach Anspruch 1, wobei die drahtlose Kommunikationsvorrichtung (10) weiter einen nichtflüchtigen Speicher (102) einschließt, der als Flugschreiber dient, und
wobei die drahtlose Kommunikationsvorrichtung (10) die Position und die Höhe der Drohne (2) durch die GPS-Einheit (104) in einem vorbestimmten Zeitintervall misst und gemessene Informationen an das Relais (11) überträgt und die gemessenen Informationen auch in dem nichtflüchtigen Speicher (102) aufzeichnet.

8. Drahtlose Kommunikationsvorrichtung (10), die an einer Drohne (2) montiert ist,
wobei die drahtlose Kommunikationsvorrichtung (10) Informationen in Bezug auf die Drohne (2) an ein Relais (11) überträgt, das auf einer ersten Höhe zwischen einer Höhe, die von der Drohne (2) erreicht werden kann, und einer Höhe eines Kommunikationssatelliten (3) fliegt,
**dadurch gekennzeichnet, dass** die drahtlose Kommunikationsvorrichtung (10) eine von der Drohne (2) getrennte Vorrichtung ist und an der Drohne (2) befestigt ist, wobei die drahtlose Kommunikationsvorrichtung (10) eine Stromversorgung (105, 106), einen Prozessor (101), ein drahtloses Kommunikationsmodul (103) und eine GPS-Einheit (104) zum Messen der Position und der Höhe der Drohne (2) einschließt, wobei die Stromversorgung, der Prozessor und die GPS-Einheit von der Drohne (2) unabhängig sind.

## Revendications

1. Système (1) de collecte d'informations de vol relatives à un drone (2), le système (1) comprenant :
un dispositif de communication sans fil (10) monté sur le drone (2) ;
un relais (11) volant à une première altitude entre une altitude à laquelle le drone (2) est capable de voler et une altitude d'un satellite de communication (3) ; et
une station au sol (12) réalisant des communications par satellite avec le satellite de communication (3), dans lequel
le dispositif de communication sans fil (10) transmet des informations relatives au drone (2),
le relais (11) inclut un récepteur (113) recevant des informations relatives au drone (2) transmises depuis le dispositif de communication sans fil (10), et un dispositif de communication par satellite (114) envoyant les informations relatives au drone (2) reçues par le récepteur (113) à la station au sol (12) par des communications par satellite utilisant le satellite de communication (3), et
la station au sol (12) collecte des informations relatives au drone (2) depuis le relais (11) par des communications par satellite,
**caractérisé en ce que** le dispositif de communication sans fil (10) est un dispositif distinct du drone (2) et est fixé au drone (2), le dispositif de communication sans fil (10) incluant une alimentation électrique (105, 106), un processeur (101), un module de communication sans fil (103), et une unité GPS (104) pour mesurer la position et l'altitude du drone (2), dans lequel l'alimentation électrique, le processeur et l'unité GPS sont indépendants du drone (2).

2. Système (1) de collecte d'informations de vol selon la revendication 1, dans lequel le relais (11) est un véhicule aérien sans pilote (11).

3. Système (1) de collecte d'informations de vol selon la revendication 1 ou la revendication 2, dans lequel le relais (11) vole en cercles dans une zone prédéterminée.

4. Système (1) de collecte d'informations de vol selon l'une quelconque des revendications 1 à 3, dans lequel le relais (11) inclut un panneau solaire (115) générant de l'énergie pour le vol et les communications.

5. Système (1) de collecte d'informations de vol selon l'une quelconque des revendications 1 à 4, dans lequel la première altitude est d'au moins 20 km et inférieure ou égale à 25 km.

6. Système (1) de collecte d'informations de vol selon l'une quelconque des revendications 1 à 5, dans lequel les informations relatives au drone (2) transmises depuis le dispositif de communication sans fil (10) incluent au moins des informations relatives à une position et à une altitude du drone (2), et des informations temporelles.

7. Système (1) de collecte d'informations de vol selon la revendication 1, dans lequel le dispositif de communication sans fil (10) inclut en outre une mémoire non volatile (102) servant d'enregistreur de vol, et
dans lequel le dispositif de communication sans fil (10) mesure la position et l'altitude du drone (2) par l'unité GPS (104) à un intervalle de temps prédéterminé, et transmet des informations mesurées au relais (11), ainsi qu'enregistre les informations mesurées dans la mémoire non volatile (102).

8. Dispositif de communication sans fil (10), monté sur un drone (2),
le dispositif de communication sans fil (10) transmettant des informations relatives au drone (2) à un relais (11) volant à une première altitude entre une altitude à laquelle le drone (2) est capable de voler et une altitude d'un satellite de communication (3),
**caractérisé en ce que** le dispositif de communication sans fil (10) est un dispositif distinct du drone (2) et est fixé au drone (2), le dispositif de communication sans fil (10) incluant une alimentation électrique (105, 106), un processeur (101), un module de communication sans fil (103), et une unité GPS (104) pour mesurer la position et l'altitude du drone (2), dans lequel l'alimentation électrique, le processeur et l'unité GPS sont indépendants du drone (2).
